# EUROPEAN PATENT APPLICATION

(11) **EP 4 154 770 A1**
(43) Date of publication of application: **29.03.2023**
(21) Application number: 21743238.4
(22) Date of filing: 12.05.2021
(51) Int. Cl.: A47F 13/00, G06Q 10/08, A47F 1/06, A47F 1/08, A47F 1/12

(54) **DEVICE FOR POSITIONING CIGARETTE PACKS IN COMPARTMENTS OF CIGARETTE PACK DISPLAY CASES, A CIGARETTE PACK DISPLAY CASE AND METHOD FOR POSITIONING CIGARETTE PACKS**

(30) Priority: 20.05.2020 PT 2020116406
(71) Applicant: Prio Energy, S.A., 3834-907 Gafanha Da Encarnação (PT); Vale Rodrigues, Gilda Andreia, 3800-508 Aveiro (PT); Gusmão Monge Soares, Luís Filipe, 3810-001 Aveiro (PT); Ferreira São Roque, Mário Rui, 4480-657 Vila Do Conde (PT); Da Costa Nunes do Amaral, Hugo, 1675-073 Pontinha (PT)
(72) Inventor: VALE RODRIGUES, Gilda Andreia, 3800-508 Aveiro (PT); GUSMÃO MONGE SOARES, Luís Filipe, 3810-001 Aveiro (PT); FERREIRA SÃO ROQUE, Mário Rui, 4480-657 Vila Do Conde (PT); DA COSTA NUNES DO AMARAL, Hugo, 1675-073 Pontinha (PT)
(74) Representative: Pereira da Cruz, Joao
(86) International application number: PCT/IB2021/054054
(87) International publication number: WO 2021/234511

(57) **Abstract**

The present invention falls within the scope of devices for positioning cigarette packs. An object of the present invention is a device for positioning cigarette packs in compartments of display cases for cigarette packs, which has a total length of at least the same length as the interior of a compartment for storing items in a display case and at least one scale (2) arranged along the total length, said scale (2) divided into a plurality of equal units (3) of a predefined width corresponding to a cigarette pack to be positioned, and comprising a unit indicator consisting of a gradient between units at the ends of the scale (2), an alphanumeric count between units at the ends of the scale (2). A display comprising the device is also the object of the present invention, as well as the method of positioning cigarette packs by means of the device.

## Description

### SCOPE AND BACKGROUND OF THE INVENTION

The present invention falls within the field of devices for positioning cigarette packs, namely relating to a device for positioning cigarette packs in compartments of display cases for cigarette packs and a display comprising said device, as well as the method for positioning a cigarette pack by means of the device, object of the present invention.

The device for positioning cigarette packs, object of the present invention, is suitable for positioning and counting items, preferably cigarette packs when packed in display compartments of commercial stores, tobacco shops and petrol stations. This system is preferably suitable for compartments aimed at storing cigarette packs with immediate replacement of the pack in its extraction position, i.e., as the cigarette packs are removed, the previous pack takes the place of the withdrawn cigarette pack, either by a gravity system or by a retractable system or any other system that moves the cigarette packs to an extraction point that coincides with the front surface the display.

The users of such displays, generally professionals operating in retail outlets, replenish the stocks of tobacco several times a day, encountering difficulties in immediately calculating the number of cigarette packs to be replenished in each compartment, by reference or brand of tobacco.

The displays commonly used for accommodating cigarette packs or smoking articles are displays that make the article permanently available at the front of the display, i.e., as soon as the user removes an item from the compartment, the previous one immediately takes the place of the removed item. For this purpose, retractable horizontal-type and gravity-type displays, including tilted or vertical displays, are available in commercial stores, tobacco shops or petrol stations.

There are no known solutions in the state-of-the-art that allow a quick, easy and affordable placement of cigarette packs to be replenished per compartment, therefore the user must either replace the packs until the compartment is full or simply move the packs to the rear end of the compartment by roughly counting the number of packs that are missing, based upon the empty spaces between the first pack of the tobacco row and the extraction position.

In addition to the difficulty of positioning and quick counting of packs to be replenished, there is also the difficulty in accessing the compartments when the displays are placed in a position higher than the hand reach of the user, as well as above the eye level. In these situations, the user often uses ladders, stools or any other object that can lift him/her to move the packs in order to count the stock to be replenished, putting at risk his/her safety besides performing an impractical task.

The present invention solves the problems of counting stocks in compartments for storing cigarette packs in display cases, both in horizontal or nearly horizontal compartments and in vertical compartments, positioned on a level within reach of the user or above the eye level of the user.

### SUMMARY OF THE INVENTION

The object of the present invention is, thus, a device for positioning cigarette packs in compartments of displays for packs of cigarettes, cigarillos, cigars or other types of packable articles in displays of the horizontal and/or gravity-type used in commercial stores and petrol stations.

It is therefore an object of this invention a device for positioning of cigarette packs, which:
a) has an overall length at least equal to the inner length of a compartment for storing items in a display case; and
b) comprises at least one scale (2) arranged along the total length, said scale (2):
   - being divided into a plurality of equal units (3), forming visually perceptible partitions between the units;
   - the equal units (3) having a predefined width, the predefined width corresponding to the thickness (1) of a cigarette pack to be positioned;
   - comprises a unit indicator, the indicator consisting of a gradient between units at scale ends (2), an alphanumeric count between units at scale ends (2), or a combination of both, and
   - the maximum number of units in the scale (2) being equal to or less than the ratio between the length of the respective compartment and the thickness (1) of the item and equal to or greater than 8.

The thickness (1) of the cigarette pack corresponds to the smallest dimension side of the solid. The thickness (1) of the pack defines the scale unit (2), corresponding to a predefined width on the scale (2) in equal units (3). On its turn, the thickness (1) of the pack also determines the maximum number of scale units (2) that corresponds to the maximum number of items that can be positioned in a compartment. Thus, the maximum scale number (2) is established by the ratio between the length of the compartment and the thickness (1) of the item, i.e. the pack of cigarettes, so that the maximum scale value (2) can be determined for compartments of various lengths depending on the size of the display case, or for cigarette packs of different thicknesses.

The maximum number of scale units (2) being equal to or greater than 8 enables the device to be configured such that the scale (2) measures from a maximum of 8 scale units (2), enabling scales (2) with a greater maximum number, i.e. enabling scales (2) for compartments of greater length or scales (2) for cigarette packs of different thicknesses.

The device is at least as long as the length formed by the maximum number of cigarette packs in a row that can be packed in the compartment, so that it is possible to read all the pack units contained in the compartment from one end of the scale (2) to the other end and positioning the cigarette packs.

In an inventive aspect of the invention, the device presents means for attachment to the compartment, preferably on the walls of the compartment, in such a way that the reading of the scale (2) is made within the compartment, resulting in an easy and simple reading. The fact that the device presents means for attachment to the compartment ensures that it is always ready for use, without running the risk of not having the device available when it needs to be used.

In another inventive aspect of the invention, the device presents a plurality of scales (2), preferably three, each scale (2) presenting a distinct total of units, and the units of each scale (2) being equal to each other. This solution with multiple scales makes it possible to use the same object for different items, avoiding that the arrangement of the items in the display is conditioned to the device, as well as allowing a number of scales solutions for the multiple options of displays and items.

It is also an object of the present invention, the display case for cigarette packs comprising at least one compartment for positioning the packs in a row and at least one device for positioning the cigarette packs as described, the device being aligned with said compartment in such a way that the depth of the compartment corresponds to the total length of the device. The alignment of the device with the compartment of the display case allows the scale (2) to be read reliably and the correct positioning of the packs to be performed.

Additionally, the display case comprises a plurality of compartments and at least one device, the device being associated with one of the compartments, preferably comprising a plurality of devices, each device being associated to a compartment. Typically, a display case has a plurality of compartments, whereby it is advantageous that each compartment has a device for faster individual reading of the scale (2) corresponding to the item stored in each compartment.

It is also an object of the present invention, a display case for cigarette packs comprising at least one compartment for positioning cigarette packs in a row, this compartment having a total length, the compartment presenting a wall engraved with at least one scale (2), this scale (2) being arranged along the total length and:
- being divided into a plurality of equal units (3), forming visually perceptible partitions between the units,
- the equal units (3) having a predefined width, the predefined width corresponding to the thickness (1) of a cigarette pack to be positioned,
- comprise a unit indicator, this indicator consisting of a gradient between units at scale ends (2), a numerical count between units at scale ends (2), or a combination of both, and
- the maximum number of units in the scale (2) being equal to or less than the ratio between the length of the respective compartment and the thickness (1) of the item and equal to or greater than 8.

The fact that at least one scale (2) is engraved on the wall of the compartment allows the displays to be supplied by the manufacturer already with the scale (2) incorporated in the display case, enabling faster production of the solution and a more uniform distribution of displays by the stores.

A method for positioning cigarette packs in compartments of a display case is also an object of the present invention. The positioning of the cigarette packs and the reading of the scale (2) of the device is carried out from the point of extraction of the item in the compartment of the display case, by applying pressure on the item at the front of the display case moving it in the direction of the depth of the compartment. The empty space between the point of extraction and the first item presented at the front of the display corresponds to the number of items to be positioned, this number corresponding to the reading on the scale (2) of the device.

Therefore, the method for positioning cigarette packs by means of the device intended for positioning the cigarette packs comprises the following steps:
a) placing the device for positioning of cigarette packs in the display compartment;
b) moving the cigarette packs in the direction of the depth of the display compartment
c) reading the scale unit (2) of the device.

### DESCRIPTION OF FIGURES

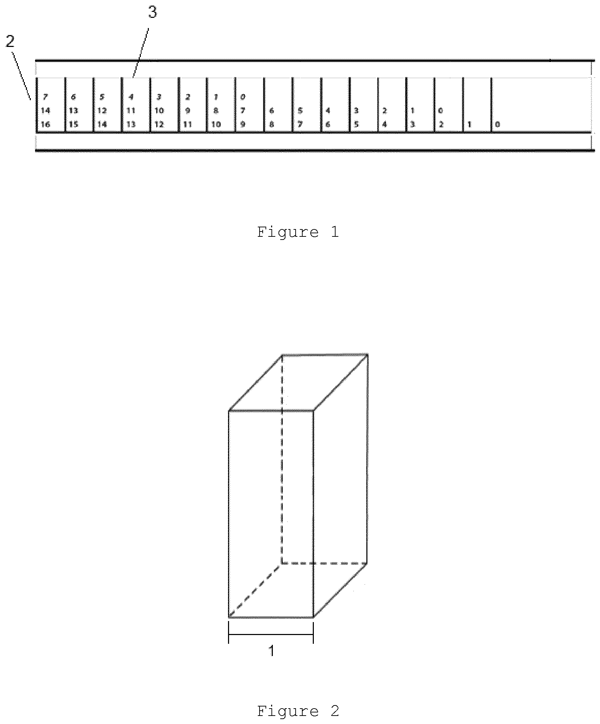

Figure 1 - illustration of a configuration of the pack-positioning device showing three scales (2), a first scale (2) with a number of units equal to 17, a second scale (2) with a number of units equal to 15, and a third scale (2) with a number of units equal to 8.

Figure 2 - illustration of a configuration of a cigarette pack, with a thickness (1) corresponding to the size of the smallest side of the pack.

### DETAILED DESCRIPTION OF THE INVENTION

More general and advantageous configurations of the present invention are described in the Summary of the invention. Such configurations are detailed below according to other advantageous and/or preferred embodiments of the present invention.

In an inventive aspect of this invention, the means for attaching the device to the compartment are adhesive-based, magnetic-based, or mechanical-based means. Optionally, the magnetic is at least one magnet and the mechanical is at least one screw or rivet. In the particular case of the magnetic means, these enable the device to be easily and quickly removed whenever it is found to be necessary to change the device or perform maintenance.

In another inventive aspect of the invention, the device presents a base structure of plastic, metal, paper or adhesive tape, the said scale (2) being formed on the base structure, which allows various possibilities in the manufacture of the device depending on the type of use, the type of display and the materials available for its manufacture, and even a greater capacity for supply and distribution.

In an embodiment of the invention in which the device presents a plurality of scales (2), preferably three, the device presents at least three faces, each of said three scales (2) being arranged on a distinct face. The device presents a parallelepiped conformation, wherein the said three faces correspond to three of the largest sized faces of the parallelepiped.

The fact that the device has at least three sides makes it possible to obtain a more robust three-dimensional object, allowing easier movement of the cigarette packs by pushing towards the depth of the compartment of the display case.

Both the device and the display case, that has at least one compartment with an engraved wall, have a scale (2) with equal units (3) and a predefined width ranging from 1.5 cm to 2.5 cm, preferably between 1.7 cm and 2.3 cm, more preferably 1.7 cm, 2.1 cm or 2.3 cm, these thicknesses corresponding to standard measures of the thickness of cigarette packs available on the market.

In one embodiment of the invention, when the predefined width is 2.3 cm, it presents a scale (2) of 17 units, a second scale (2) with 15 units and a third scale (2) with 8 units. In another embodiment of the invention, when the predefined width is 2.1 cm, it presents a scale (2) of 17 units, a second scale (2) with 15 units and a third scale (2) with 8 units. In yet another embodiment of the invention, when the predefined width is 1.7 cm, it presents a scale (2) of 9 units, a second scale (2) with 16 units and a third scale (2) with 18 units.

Both the device and the display, that presents at least one compartment with an engraved wall, have additionally a scale (2) of colour intensity gradient on the total length, the most intense colour corresponding to one end of the scale (2) and the least intense colour corresponding to the other end of the scale (2). This configuration constitutes an alternative way of reading the scale (2), allowing the latter to be read by estimation, this reading being advantageous in situations where the user only wishes to have a quick estimate of the number of packs stored in the compartment.

In one embodiment of the invention of the display case, the device is removable from the compartment. The device is entered inside the compartment when it is necessary to count the cigarette packs in the compartment by reading the scale (2), this reading being made outside the compartment, i.e. at the point of extraction of the cigarette packs. This configuration is particularly advantageous when the display cases are located in places which are difficult to access and read, i.e. when they are positioned at a height above the user's eye level, making it difficult to read the scale (2) safely and quickly.

Additionally, when the device is removable from the display case, the display case presents an additional length (4) in relation to the total length, that is, it presents a portion beyond the scale (2), which allows the user to pick up and place the device inside the compartment, without interfering with the scale reading (2).

In one embodiment of the invention, the display case comprises a wall having a plurality of scales (2) engraved on it, preferably three, each scale (2) presenting a distinct total of units, corresponding to cigarette packs of different thicknesses, and the units of each scale (2) being equal to each other.

The display case comprises at least one compartment of horizontal retractable-type, of tilted gravity-type, of vertical type and/or combinations thereof.

The present device and display case for the positioning of cigarette packs provides for an easy and affordable positioning and counting of stocks of cigarette packs in display cases, as the reading is done visually without recourse to technological means, and so it is simple to read and easy to implement.

## Claims

1. A device for positioning cigarette packs in compartments of display cases for cigarette packs, **characterized in that:**
a) it has an overall length at least equal to the inner length of a compartment for storing items in a display case; and
b) it comprises at least one scale (2) arranged along the total length, said scale (2):
- being divided into a plurality of equal units (3), forming visually perceptible partitions between the units;
- the equal units (3) having a predefined width, the predefined width corresponding to the thickness (1) of a cigarette pack to be positioned;
- comprises a unit indicator, the indicator consisting of a gradient between units at scale ends (2), an alphanumeric count between units at scale ends (2), or a combination of both, and
- the maximum number of units in the scale (2) being equal to or less than the ratio between the length of the respective compartment and the thickness (1) of the item and equal to or greater than 8.

2. A device according to the previous claim, **wherein** it comprises means for attachment to a compartment.

3. A device according to the previous claim, **wherein** the base of the means for attachment is:
- adhesive,
- magnetic, optionally at least one magnet, or
- mechanical, optionally at least one screw or rivet.

4. A device according to any one of the above claims, **wherein** it comprises a base structure made of plastic, metal, paper or adhesive tape, the said scale (2) being formed on the base structure.

5. A device according to any one of the above claims, **wherein** it presents a plurality of scales (2), preferably three, each scale (2) presenting a distinct total of units, and the units of each scale (2) being equal to each other.

6. A device according to claim 5, **wherein** it presents at least three faces, each of said three scales (2) being arranged on a distinct face.

7. A device according to the previous claim, **wherein** it presents a parallelepiped conformation, wherein the said three faces correspond to three of the largest sized faces of the parallelepiped.

8. A device according to the previous claim, **wherein** each face presents a plurality of scales (2), preferably three.

9. A device according to any one of the above claims, **wherein** the said predefined width ranges from 1.5 cm to 2.5 cm, preferably from 1.7 to 2.3 cm, more preferably being of 1.7 cm, 2.1 cm or 2.3 cm.

10. A device according to claim 9, **wherein** it presents a scale (2) of 17 units, a second scale (2) with 15 units and a third scale (2) with 8 units when the predefined width is 2.3 cm.

11. A device according to claim 9, **wherein** it presents a first scale (2) with 17 units, a second scale (2) with 15 units and a third scale (2) with 8 units when the predefined width is 2.1 cm.

12. A device according to claim 9, **wherein** it presents a first scale (2) with 18 units, a second scale (2) with 16 units and a third scale (2) with 9 units when the predefined width is 1.7 cm.

13. A device according to any one of the above claims, **wherein** it comprises a scale (2) of colour intensity gradient on the total length, the said scale presenting a more intense colour in one end and a less intense colour in the other end.

14. A device according to claims 5 and 6, **wherein** it presents an additional length (4) in relation to the total length.

15. A display case for cigarette packs, **wherein** it comprises at least one compartment for positioning the cigarette packs in a row and at least one device according to any one of the above claims, the device being aligned with said compartment in such a way that the depth of the compartment corresponds to the length of the device.

16. A display case according to claim 15, **wherein** the device is removable from the compartment.

17. A display case according to any of the claims 15-16, **wherein** it comprises a plurality of compartments and at least a device, the device being associated to one of the compartments, preferably comprising a plurality of devices, each device being associated to a compartment.

18. A display case for cigarette packs, **wherein** it comprises at least one compartment for positioning of cigarette packs in a row, this compartment presenting a wall engraved with at least one scale (2), this scale (2) being arranged along the total length and:
- being divided into a plurality of equal units (3), forming visually perceptible partitions between the units,
- the equal units (3) having a predefined width, the predefined width corresponding to the thickness (1) of a cigarette pack to be positioned,
- comprise a unit indicator, this indicator consisting of a gradient between units at scale ends (2), a numerical count between units at scale ends (2), or a combination of both, and
- the maximum number of units in the scale (2) being equal to or less than the ratio between the length of the respective compartment and the thickness (1) of the item and equal to or greater than 8.

19. A display case according to the previous claim, **wherein** it comprises a plurality of scales (2), preferably three, each scale (2) presenting a distinct total of units, and the units of each scale (2) being equal to each other.

20. A display case according to any of the claims 18-19, **wherein** the said predefined width varies between 1.5 cm and 2.5 cm, preferably between 1.7 and 2.3 cm, more preferably being of 1.7 cm, 2.1 cm or 2.3 cm.

21. A display case according to the previous claim, **wherein** it presents a first scale (2) with 17 units, a second scale (2) with 15 units and a third scale (2) with 8 units, when the predefined width is 2.3 cm.

22. A display case according to the previous claim, **wherein** it presents a first scale (2) with 17 units, a second scale (2) with 15 units and a third scale (2) with 8 units, when the predefined width is 2.1 cm.

23. A display case according to the previous claim, **wherein** it presents a first scale (2) with 18 units, a second scale (2) with 16 units and a third scale (2) with 9 units, when the predefined width is 1.7 cm.

24. A display case according to any of claims 18-23, **wherein** it comprises at least one compartment of horizontal retractable-type, of tilted gravity-type, of vertical type and/or combinations thereof.

25. A method for the positioning of cigarette packs using the device described in claims 1 to 14, **wherein** it comprises the following steps:
a) placing the stock counting system in the compartment for storing of items;
b) moving the cigarette packs towards the rear end of the compartment;
c) reading of stock through the scale (2).

26. Use of the device described from 1 to 14 in display cases of horizontal retractable-type and of vertical or tilted gravity-type.
